(19)

Europäisches Patentamt

European Patent Office

Office européen des brevets

(11) **EP 4 383 390 A1**

(12) **EUROPEAN PATENT APPLICATION**
published in accordance with Art. 153(4) EPC

(43) Date of publication:
**12.06.2024 Bulletin 2024/24**

(21) Application number: **22946053.0**

(22) Date of filing: **30.12.2022**

(51) International Patent Classification (IPC):
$H01M\ 10/0525^{(2010.01)}$  $H01M\ 10/0567^{(2010.01)}$
$H01M\ 4/13^{(2010.01)}$  $H01M\ 4/36^{(2006.01)}$

(52) Cooperative Patent Classification (CPC):
Y02E 60/10

(86) International application number:
**PCT/CN2022/144288**

(87) International publication number:
**WO 2024/087388 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.10.2022  CN 202211328888**

(71) Applicant: **Sunwoda Electric Vehicle Battery Co., Ltd.**
**Shenzhen, Guangdong 518107 (CN)**

(72) Inventors:
• **ZHANG, Xuhui**
  **Shenzhen, Guangdong 518107 (CN)**
• **WANG, Baoyu**
  **Shenzhen, Guangdong 518107 (CN)**
• **CHEN, Hui**
  **Shenzhen, Guangdong 518107 (CN)**
• **ZHANG, Yao**
  **Shenzhen, Guangdong 518107 (CN)**

(74) Representative: **Murgitroyd & Company**
**165-169 Scotland Street**
**Glasgow G5 8PL (GB)**

(54) **SECONDARY BATTERY AND ELECTRICAL DEVICE**

(57)  Disclosed are a secondary battery and an electrical device. The secondary battery includes a positive electrode plate and a negative electrode plate, and the secondary battery satisfies $0.258 \le CB/PD \le 0.700$. The present disclosure improves the cycle and storage lives of the secondary battery and the energy efficiency of the secondary battery, and reduces the energy loss during charging and discharging, by reasonably controlling the ranges of the CB value and the PD.

EP 4 383 390 A1

**Description**

This application claims priority to Chinese Patent Application No. 202211328888.2, filed in the China National Intellectual Property Administration on October 27, 2022, entitled "SECONDARY BATTERY AND ELECTRICAL DEVICE", which is incorporated herein by reference in its entirety.

TECHNICAL FIELD

The present disclosure relates to a field of battery technology, and more particularly, to a secondary battery and an electrical device.

BACKGROUND

Lithium-ion batteries have huge advantages in a field of energy storage, but there are still some problems in practical application. Taking a lithium iron phosphate battery as an example, the service life of the lithium iron phosphate single cell is 4000-6000 times, and it is difficult to meet the requirement of 20-30 years of service life (the number of cycles is more than 10,000) of the energy storage project with high life requirement, and the loss of active lithium is the main factor of the degradation of the service life of the lithium-ion battery. During the process of lithium deintercalation of the battery cycle, due to the expansion and contraction of graphite, the dissolution of the transition metal of the positive electrode, and the like, the SEI is broken and formed, the area and thickness of the SEI film are increased, which consumes limited active lithium in the battery system, which finally leads to a shortened service life of the battery. How to reduce and supplement the active lithium consumption in the process of battery degradation is a key issue in increasing the life of the lithium iron phosphate batteries.

In order to solve such problems, it is common to perform "lithium replenishment" on the negative electrode, which can be divided into physical lithium replenishment and electrochemical lithium replenishment depending on the lithium replenishment method. However, the physical lithium replenishment is prone to cause lithium precipitation during subsequent battery cycling, resulting in short-circuit of the battery and potential safety hazard. Electrochemical lithium replenishment may compensate for the disadvantages of physical lithium replenishment, but the current methods have little effect or cumbersome process or high cost, and are not suitable for the popularization of practical production.

Therefore, there is a need to develop a secondary battery that has an extremely long cycle life and excellent electrochemical performance, is easy to process and manufacture, and has a lower cost of use.

SUMMARY

Technical problem

Object of the present disclosure is to provide a secondary battery that improves the cycle life and the storage life of the secondary battery by adjusting the relationship between the CB value and the compaction density of the positive electrode plate of the battery.

Technical solution

According to a first aspect, an embodiment of the present application provides a secondary battery including a positive electrode plate and a negative electrode plate, the secondary battery satisfying $0.258 \leq CB/PD \leq 0.700$; the secondary battery satisfies $0.258 \leq CB/PD \leq 0.700$; wherein CB refers to a ratio of a capacity of the negative electrode plate per unit area to a capacity of the positive electrode plate per unit area; and; PD refers to a compaction density of the positive electrode plate, in units of g/cm$^3$.

In some embodiments, $0.275 \leq CB/PD \leq 0.55$.

In some embodiments, $0.31 \leq CB/PD \leq 0.48$.

In some embodiments, $0.8 \leq CB \leq 1.1$.

In some embodiments, $0.8 \leq CB \leq 1.05$.

In some embodiments, the compaction density PD of the positive electrode plate satisfies: $1.5 \leq PD \leq 3.1$, in units of g/cm$^3$.

The positive electrode plate includes a positive electrode active material layer, and the positive electrode active material layer includes a positive electrode active material; the negative electrode plate includes a negative electrode active material layer, and the negative electrode active material layer includes a negative electrode active material; and the positive electrode active material and the negative electrode active material satisfy: $2 \leq Dv50'/Dv50 \leq 25$. Dv50' refers to a particle size of the negative electrode active material corresponding to a cumulative volume percentage of the negative electrode active material reaching 50%, in units of $\mu$m; Dv50 refers to a particle size of the positive electrode active material corresponding to a cumulative volume percentage of the positive electrode active material reaching 50%, in units of $\mu$m.

In some embodiments, the particle size of the negative electrode active material satisfies: $5 \leq Dv50' \leq 25$.

In some embodiments, the particle size of the positive electrode active material satisfies: $0.3 \leq Dv50 \leq 3.5$.

In some embodiments, the particle size of the negative electrode active material satisfies: $0.5 \leq Dv10' \leq 10$, $2.5 \leq Dv90' \leq 45$, $Dv99' \leq 50$, $Dn10' \leq 4$, $0.5 \leq Dn50' \leq 10.5$, $1.5 \leq Dn90' \leq 25$, $Dn99' \leq 40$, in units of $\mu$m.

In some embodiments, the particle size of the positive electrode active material satisfies: $0.1 \leq Dv10 \leq 1$, $0.5 \leq Dv90 \leq 6.5$, $3.5 \leq Dv99 \leq 20$, $0.05 \leq Dn10 \leq 1$, $0.1 \leq Dn50 \leq 2.5$, $0.5 \leq Dn90 \leq 3.5$, $1.5 \leq Dn99 \leq 10$, in units of $\mu$m.

In some embodiments, the positive electrode active material layer and the negative electrode active material layer satisfy: $0 \leq (H_1 - H_2)/H_2 \leq 0.9$; where $H_1$ refers to a thickness of the positive electrode active material layer on one side, in units of $\mu$m; $H_2$ refers to a thickness of the negative electrode active material layer on one side, in units of $\mu$m.

In some embodiments, $40 \leq H_1 \leq 160$, $30 \leq H_2 \leq 120$.

In some embodiments, the chemical formula of the positive electrode active material includes $Li_yA_xFe_{(1-x)}PO_4$, $0.8 \leq y \leq 1.2$, $0 < x < 1$, and the element A includes at least one of Ni, Co, Mn, Mg, Ca, Ba, Ti, or V.

In some embodiments, the weight ratio of element A in the positive electrode active material ranges from 0 to 36%.

The secondary battery includes an electrolyte including a first additive, and the first additive includes at least one of vinylene carbonate or vinyl ethylene carbonate.

The electrolyte includes a second additive including at least one of LiFSI, LiODFB, $LiPO_2F_2$, $LiBF_4$, or LiBOB.

In some embodiments, a content of the first additive is a% based on a total weight of the electrolyte, where a, CB, and PD satisfy $0.2 \leq a \times CB/PD \leq 3$.

In some embodiments, a content of the second additive is b% based on the total weight of the electrolyte; and a, b satisfy at least one of the following features:

$$(I)\ 0.1 \leq a+b \leq 5;$$

or

$$(II)\ 0.1 \leq a/b \leq 10.$$

In some embodiments, the secondary battery satisfies: $1.1 \leq CB' \leq 1.3$; where CB' refers to a ratio of a reversible capacity of the negative electrode plate per unit area to an actual capacity of the positive electrode plate per unit area.

According to a second aspect, the present disclosure further provides an electric device including the secondary battery as a power supply for the electric device.

Beneficial effect

Compared with the prior art, the secondary battery of the present disclosure includes a positive electrode plate and a negative electrode plate, the secondary battery satisfies $0.258 \leq CB/PD \leq 0.700$. The present disclosure improves the cycle and storage lives of the secondary battery and the energy efficiency of the secondary battery, and reduces the energy loss during charging and discharging, by reasonably controlling a ratio of the battery design CB value to the PD value of the positive electrode plate.

DETAILED DESCRIPTION

A secondary battery and an electrical device are provided by the present disclosure. In order to make the objects, technical solutions, and effects of the present disclosure clearer and more explicit, the present disclosure will be described in further detail below with reference to the embodiments. It is to be understood that the specific embodiments described herein are merely illustrative of the present disclosure and are not intended to limit the present disclosure.

Secondary battery

The present disclosure provides a secondary battery including a positive electrode plate and a negative electrode plate. The secondary battery satisfies: $0.258 \leq CB/PD \leq 0.700$, where a CB value refers to a ratio of a capacity of a negative electrode plate per unit area to a capacity of a positive electrode plate per unit area, and PD refers to a compaction density of the positive electrode plate in units of g/cm$^3$.

When calculating the CN value, it is necessary to keep the unit area of the positive electrode plate and the unit area of the negative electrode plate equal, and the CB value is the reversible capacity of the negative electrode plate of the battery/the reversible capacity of the positive electrode plate of the battery. In the present disclosure, by limiting a ratio of CB/PD, the lithium ion deintercalation rates of the positive and negative electrode materials are balanced, thereby improving the cycle and storage life of the secondary battery.

In some embodiments, the CB values are obtained by the following test methods.

A capacity of a negative electrode plate per unit area: active material is retained at one side of the negative electrode plate per unit area, a button-type battery is formed by assembling the negative electrode plate per unit area with a lithium sheet, a separator, and an electrolyte, the button-type battery is discharged to 0.005V at 0.1C, is discharged to 0.005V at 0.05mA, is discharged to 0.005V at 0.02mA, and is charged to 2V at 0.1C, and a resulting charging capacity is the capacity of the negative electrode plate per unit area;

A capacity of a positive electrode plate per unit area: active material is retained at one side of the positive electrode plate per unit area, a button-type battery is formed by assembling the positive electrode plate per unit area with a lithium sheet, a separator, and an electrolyte, the button-type battery is charged to 3.7V at 0.1C, the current changes to 50$\mu$A under a constant voltage, and the button-type battery is discharged to 2.0V at 0.1C. A resulting discharging capacity is the capacity of the positive electrode plate per unit area.

In some embodiments, the compaction density is calculated by the following equation:

Compaction density = areal density/(thickness of electrode plate after rolling - thickness of current collector), its units is g/cm$^3$.

In some embodiments, the compaction density of the positive electrode plate is calculated by the following equation:

Compaction density of positive electrode plate = areal density of positive electrode plate/(thickness of positive electrode plate after rolling - thickness of positive current collector), its units is g/cm$^3$.

In some embodiments, the compaction density is tested with a compaction densimeter, and the test process is referenced to the Chinese National Standard GB/T 24533-2019.

In some embodiments, the value of CB/PD may be any value of 0.258, 0.28, 0.30, 0.32, 0.33, 0.341, 0.35, 0.353, 0.36, 0.367, 0.37, 0.38, 0.383, 0.39, 0.40, 0.41, 0.43, 0.45, 0.458, 0.47, 0.48, 0.50, 0.52, 0.54, 0.55, 0.57, 0.59, 0.60, 0.62, 0.64, 0.65, 0.67, 0.69, 0.70, or in a range of any two values above.

In some embodiments, the value of CB may be any value of 0.8, 0.81, 0.82, 0.821, 0.83, 0.845, 0.846, 0.85, 0.852, 0.86, 0.87, 0.88, 0.89, 0.896, 0.9, 0.91, 0.92, 0.93, 0.94, 0.95, 0.952, 0.958, 0.96, 0.97, 0.98, 0.99, 1.0, 1.05, 1.10, or in a range of any two values above.

According to the present disclosure, the reversible capacity of the positive electrode plate of the battery is increased through the redundant design of the positive electrode plate, only part of lithium ions are released from the positive electrode plate through charging test control with the rated capacity during the working process of the battery, and excess lithium ions are used as a reserve to supplement the loss of active lithium during the working process of the secondary battery, so that the active lithium is always in a proper range, and the storage capacity recovery rate and energy efficiency are improved.

In some embodiments, the value of PD (g/cm$^3$) may be any value of 1.5, 1.6, 1.8, 1.9, 2.0, 2.2, 2.4, 2.5, 2.7, 2.8, 2.9, 3.0, 3.1, or in a range of any two values above.

The present disclosure further defines the compaction density of the positive electrode plate, to increase the usable capacity of the battery, and improve the cycle life of the battery. In the manufacturing process of the lithium ion power battery, the compaction density has a great influence on the performance of the battery. It has been proved by experiments that the compaction density is closely related to the specific capacity, efficiency, internal resistance, and battery cycle performance, and thus, the compaction density is also used as one of the reference indexes of the material energy density.

In some embodiments, Dv50 (in units of $\mu$m) of the positive electrode active material particles and Dv50' (in units of $\mu$m) of the negative electrode active material particles satisfy: $2 \leq Dv50'/Dv50 \leq 25$.

In some embodiments, $5 \leq Dv50'/Dv50 \leq 25$.

In some embodiments, $10 \leq Dv50'/Dv50 \leq 25$.

In some embodiments, $14 \leq Dv50'/Dv50 \leq 25$.

In some embodiments, Dv50'/Dv50 is any value of 5.0, 5.5, 5.9, 6.0, 6.3, 6.5, 6.8, 7.0, 7.3, 7.8, 8.0, 8.3, 8.5, 8.8, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.5, 12.7, 13.0, 13.3, 13.5, 13.7, 13.9, 14.0, 14.3, 14.5, 14.8, 15.0, 15.3, 15.5, 15.7, 16.0, 16.3, 16.5, 16.7, 17.0, 17.3, 17.5, 17.7, 18.0, 18.3, 18.5, 18.7, 19.0, 19.3, 19.5, 19.9, 20.0, 20.5, 21.0, 21.5, 22.0, 23.0, 24.0, 25.0, or in a range of any two values above.

In the present disclosure, by further optimizing the particles of the positive electrode active material and the particles of the negative electrode active material, the lithium ion deintercalation rate matching of the positive electrode material and the negative electrode material is improved, and improves the cycle life of the secondary battery is improved.

In some embodiments, the particle size of the positive electrode active material satisfies: $0.3 \leq Dv50 \leq 3.5$, $0.1 \leq Dv10 \leq 1.0$, $0.5 \leq Dv90 \leq 6.5$, $3.5 \leq Dv99 \leq 20$; $0.1 \leq Dn50 \leq 2.5$, $0.05 \leq Dn10 \leq 1.0$, $0.5 \leq Dn90 \leq 3.5$, $1.5 \leq Dn99 \leq 10$, in units of $\mu m$.

In some embodiments, the particle size Dv50 ($\mu m$) of the positive electrode active material is any value of 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, or in a range of any two values above.

In some embodiments, the particle size of the negative electrode active material satisfies: $5.0 \leq Dv50' \leq 25.0$, $0.5 \leq Dv10' \leq 10.0$, $2.5 \leq Dv90' \leq 45.0$, $Dv99' \leq 50.0$; $0.5 \leq Dn50' \leq 10.5$, $Dn10' \leq 4.0$, $1.5 \leq Dn90' \leq 25.0$, $Dn99' \leq 40.0$, in units of $\mu m$.

In some embodiments, the particle size Dv50' ($\mu m$) of the negative electrode active material is any value of 5.0, 5.5, 6.0, 6.3, 6.5, 6.7, 7.0, 7.3, 7.5, 7.8, 8.0, 8.3, 8.5, 8.8, 9.0, 9.3, 9.5, 9.8, 10.0, 10.3, 10.5, 10.8, 11.0, 11.3, 11.5, 11.8, 12.0, 12.3, 12.5, 12.8, 13.0, 13.3, 13.5, 13.8, 14.0, 14.3, 14.5, 14.8, 15.0, 15.3, 15.5, 15.8, 16.0, 16.3, 16.5, 16.8, 17.0, 17.5, 18.0, 18.5, 19.0, 19.5, 20.0, 21.0, 22.0, 23.0, 24.0, 25.0, or in a range of any two values above.

The definitions of the particle size of the positive electrode material and the particle size of the negative electrode material in the present disclosure are well-known meanings in the art: Dv10' refers to a particle size corresponding to when the cumulative volume percentage of the negative electrode active material particles reaches 10%; Dv50' refers to a particle size corresponding to when the cumulative volume percentage of the negative electrode active material particles reaches 50%; Dv90' refers to a particle size corresponding to when the cumulative volume percentage of the negative electrode active material particles reaches 90%; Dv99' refers to a particle size corresponding to when the cumulative volume percentage of the negative electrode active material particles reaches 99%. Dn10' refers to a particle size corresponding to when the distribution of the number of the negative electrode active material particles reaches 10%, Dn50' refers to a particle size corresponding to when the distribution of the number of the negative electrode active material particles reaches 50%, Dn90' refers to a particle size corresponding to when the distribution of the number of the negative electrode active material particles reaches 90%, and Dn99' refers to a particle size corresponding to when the distribution of the number of the negative electrode active material particles reaches 99%.

Dv10 refers to a particle size corresponding to when the cumulative volume percentage of the positive electrode active material particles reaches 10%; Dv50 refers to a particle size corresponding to when the cumulative volume percentage of the positive electrode active material particles reaches 50%; Dv90 refers to a particle size corresponding to when the cumulative volume percentage of the positive electrode active material particles reaches 90%; Dv99 refers to a particle size corresponding to when the cumulative volume percentage of the positive electrode active material particles reaches 99%; Dn10 refers to a particle size corresponding to when the distribution of the number of the positive electrode active material particles reaches 10%, Dn50 refers to a particle size corresponding to when the distribution of the number of the positive electrode active material particles reaches 50%, Dn90 refers to a particle size corresponding to when the distribution of the number of the positive electrode active material particles reaches 90%, and Dn99 refers to a particle size corresponding to when the distribution of the number of the positive electrode active material particles reaches 99%.

In some embodiments, the positive electrode active material layer (thickness of the single-sided active material, $H_1$, in units of $\mu m$) and the negative electrode active material layer (thickness of the single-sided active material, $H_2$, in units of $\mu m$) satisfy: $0 \leq (H_1-H_2)/H_2 \leq 0.9$, and the thicknesses of the positive electrode active material layer and the negative electrode active material layer are within this range, which can improve the lithium ion deintercalation rate matching of the positive electrode material and the negative electrode material, and improve the cycle life of the secondary battery.

In some embodiments, $(H_1-H_2)/H_2$ is any value of 0.1, 0.2, 0.3, 0.4, 0.5, 0.6, 0.7, 0.8, 0.9, or in a range of any two values above.

In some embodiments, $40 \leq H_1 \leq 160$.

In some embodiments, $H_1$ (in units of $\mu m$) is any value of 40, 50, 60, 70, 80, 90, 100, 110, 120, 130, 130, 140, 150, 160, or in a range of any two values above.

In some embodiments, $30 \leq H_2 \leq 120$.

In some embodiments, $H_2$ (in units of $\mu m$) is any value of 30, 40, 50, 60, 70, 80, 90, 100, 110, 120, or in a range of any two values above.

In some embodiments, the chemical formula of the positive electrode active material includes $Li_yA_xFe_{(1-x)}PO_4$, where $0.8 \leq y \leq 1.2$, $0 < x < 1$, and the element A includes at least one of Ni, Co, Mn, Mg, Ca, Ba, Ti, or V.

In some embodiments, the content of the element A in the lithiumcontaining compound in the positive electrode active material is appropriate, so that the particles of the positive electrode active material may have higher energy density and stability, and the electrical device may have better comprehensive performance.

In some embodiments, the weight ratio of element A in the positive electrode active material ranges from 0 to 36%.

In some embodiments, the weight ratio of element A in the positive electrode active material is any value of 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, or in a range of any two values above.

In the present disclosure, by adding element A to the positive electrode active material and defining the content of element A, the operating voltage platform of the secondary battery and the energy density are increased, the positive material dynamics are improved, and the cycle life and energy efficiency of the secondary battery are improved.

In some embodiments, the secondary battery includes an electrolyte, the electrolyte includes a first additive, the first additive includes at least one of vinylene carbonate or vinyl ethylene carbonate. The content of the first additive is a% based on the total weight of the electrolyte.

In some embodiments, the electrolyte includes a second additive, the second additive includes at least one of LiFSI, LiODFB, $LiPO_2F_2$, $LiBF_4$, or LiBOB. The content of the second additive is b% based on the total weight of the electrolyte.

In some embodiments, $0.2 \leq a*CB/PD \leq 3$ is satisfied.

In some embodiments, $0.1 \leq a+b \leq 5$ is satisfied.

In some embodiments, $0.1 \leq a/b \leq 10$ is satisfied.

In some embodiments, the value of a*CB/PD is any value of 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, or in a range of any two values above.

In some embodiments, the value of (a+b) is any value of 0.1, 0.5, 0.8, 1.0, 1.3, 1.5, 1.8, 2.0, 2.3, 2.5, 2.8, 3.0, 3.3, 3.5, 3.8, 4.0, 4.3, 4.5, 4.8, 5.0, or in a range of any two values above.

In some embodiments, the value of alb is any value of 0.1, 0.3, 0.5, 0.7, 0.9, 1.0, 1.3, 1.5, 1.7, 2.0, 2.3, 2.5, 2.8, 3.0, 3.3, 3.5, 3.7, 4.0, 4.3, 4.5, 4.8, 5.0, 5.3, 5.5, 5.8, 6.0, 6.3, 6.5, 7.0, 7.3, 7.5, 7.8, 8.0, 8.3, 8.5, 8.8, 9.0, 9.3, 9.5, 9.7, 10.0, or in a range of any two values above.

The present disclosure ensures that the first and second additives of the secondary battery are sufficient throughout the life cycle, which will not cause the capacity decay acceleration due to insufficient additives.

In some embodiments, since the capacity of the positive electrode is relatively excessive, in order to avoid lithium precipitation of the negative electrode during charging to affect the life and safety performance of the secondary battery, a charging method of constant-capacity charging is used during operation of the secondary battery.

In some embodiments, the secondary battery satisfies that the secondary battery is charged at $n_1/n_2$ A for $n_2$ h when charging in the early stage of the cycle, where $n_2 \geq 0.5$; $n_1$ refers to the nominal capacity of the secondary battery, i.e., the actual use capacity, in units of Ah; $n_2$ is the charging time of the secondary battery, in units of h.

The nominal capacity refers to the capacity specified by the factory of the battery.

In some embodiments, the secondary battery satisfies: $1.10 \leq n_4/m \leq 1.3$; $0.8 \leq n_4/n_3 \leq 1.1$; where $n_3$ refers to the positive electrode reversible capacity of the secondary battery, in units of Ah, and $n_4$ refers to the negative electrode reversible capacity of the secondary battery, in units of Ah.

In some embodiments, the CB' value actually used satisfies: $1.10 \leq CB' \leq 1.30$, i.e., the negative electrode reversible capacity of the battery/the positive electrode actually exerted capacity of the battery is between 1.10 and 1.30.

In some embodiments, the CB' value is any value of 1.10, 1.11, 1.12, 1.13, 1.14, 1.15, 1.16, 1.17, 1.18, 1.19, 1.20, 1.21, 1.22, 1.23, 1.24, 1.25, 1.26, 1.27, 1.28, 1.29, 1.30, or in a range of any two values above.

In some embodiments, the positive electrode plate includes a positive electrode current collector and a positive electrode active material disposed on the positive electrode current collector.

In some embodiments, the positive electrode active material may also be one or more of lithium iron phosphate, lithium cobalt oxide, lithium nickel oxide, or lithium manganate.

In some embodiments, the positive electrode active material is lithium iron phosphate, lithium cobalt oxide, lithium nickel oxide, and lithium manganate, and the preparation method is the prior art, and the preparation methods that can be exemplified are a high-temperature solid phase method, a carbothermal reduction method, a spray drying method, a template method, or a hydrothermal synthesis method.

In the specific implementation, the lithium iron phosphate, the positive electrode active material, may be prepared by mixing lithium source ($Li_2CO_3$), iron source ($FePO_4$), and a carbon source, pretreating the mixture at 300-500°C, and then sintering the mixture at 600~850°C to prepare the lithium iron phosphate as the positive electrode active material.

In some embodiments, the positive electrode active material is lithium cobalt oxide, the preparation method is the prior art, and methods that can be exemplified include a high-temperature solid phase method, a sol-gel method, and the like.

In a specific implementation, lithium cobalt oxide, the positive electrode active material, may be prepared by mixing and grinding lithium source ($Li_2CO_3$), cobalt source ($CO_3O_4$), and ethanol, pretreating the mixture at 300°C, and then sintering the mixture at 600°C and performing a solid-phase reaction at 800°C to obtain the lithium cobalt oxide.

In some embodiments, the intermediate product obtained during the preparation of the positive electrode active material may also be subjected to a crushing treatment and sieved to obtain a positive electrode active material having an optimized particle size distribution and specific surface area. There is no particular limitation on the manner of crushing, selection can be made according to actual needs, for example using a particle crusher. The preparation method of the positive electrode active material of the present disclosure is not limited to the above preparation method, as long as the positive electrode active material formed has the characteristics shown in the present disclosure.

In some embodiments, the preparation process of the positive electrode plate may include the steps of stirring, coating, drying, cold calendering, slitting, and cutting.

In some embodiments, the positive electrode plate further includes a conductive agent and an adhesive, and the types and contents of the conductive agent and the adhesive are not specifically limited, and may be selected according to actual requirements. In some embodiments, the conductive agent may include conductive carbon black, carbon nanotubes, graphene, and the like, and the adhesive may include polyvinylidene fluoride.

In some embodiments, the preparation of the positive electrode plate includes: dispersing the above-mentioned positive electrode active material, conductive agent, and adhesive in a certain proportion in N-methylpyrrolidone (NMP), coating the resulting slurry on an aluminum foil, drying, and then performing cold calendering and slitting to obtain the positive electrode plate.

Negative electrode plate

In some embodiments, the negative electrode plate includes a negative electrode current collector and a negative electrode active material, an adhesive, and a conductive agent covering the negative electrode current collector. The types and contents of the negative electrode active material, the adhesive, and the conductive agent are not particularly limited, and can be selected according to actual requirements. In some embodiments, the negative electrode active material includes one or more of artificial graphite, natural graphite, mesocarbon microspheres, amorphous carbon, lithium titanate, or silicon-carbon alloy. The negative electrode active materials also need to have the characteristics of high compaction density, high mass specific capacity, and high volume specific capacity.

Electrolyte

In some embodiments, the main components of the electrolyte include lithium salt, organic solvent, and additive. The types and compositions of the lithium salt and the organic solvent are not particularly limited, and can be selected according to actual requirements. The lithium salt may include lithium hexafluorophosphate, and the solvent may include ethylene carbonate, ethyl methyl carbonate, dimethyl carbonate, propyl propionate, and the like.

Separator

In some embodiments, the kind of the separator is not particularly limited, and may be selected according to actual requirements. The separator may be a polypropylene film, a polyethylene film, a polyvinylidene fluoride film, a spandex film, an aramid film, or a multilayer composite film modified by a coating.

In some embodiments, the preparation of the secondary battery includes: the positive electrode plate, the separator, and the negative electrode plate are stacked in sequence so that the separator plays the role of isolation between the positive electrode plate and the negative electrode plate; after winding the positive electrode plate, the separator, and the negative electrode plate into a square-shaped bare battery core, the bare battery core is loaded into the battery case; and after it is baked at 65~95°C and the water is removed, an electrolyte is injected, and the secondary battery is obtained by sealing, standing, hot-cold calendering, formation, fixture, sorting, and the like.

In some embodiments, the preparation of the secondary battery includes:

(1) mixing lithium iron phosphate, a positive electrode conductive agent, a positive electrode adhesive, and a positive electrode solvent to prepare a positive electrode slurry, and coating the positive electrode slurry on a surface of a positive electrode current collector to obtain a positive electrode plate;

(2) mixing graphite, a negative electrode dispersant, a negative electrode conductive agent, a negative electrode adhesive, and a negative electrode solvent to prepare a negative electrode slurry, and coating the negative electrode slurry on a surface of a negative electrode current collector to obtain a negative electrode plate;

(3) in the preparation process of the lithium ion battery, the positive electrode plate, the negative electrode plate, the separator, and other battery parts prepared in the present disclosure are assembled, and the long-life lithium lithium iron phosphate lithium ion battery is obtained through the steps of shaping, baking, packaging, electrolyte injection, formation, sorting, and the like; the types of the battery include soft pack type, cylinder type, aluminum case type, and the like; wherein the design CB value of the battery satisfies $0.8 \leq CB \leq 1.10$, i.e., the reversible capacity of the negative electrode plate of the battery/ the reversible capacity of the positive electrode plate of the battery is between 0.8 and 1.10, and the battery satisfies the $0.258 \leq$ battery design CB/positive electrode plate $PD \leq 0.700$, $2.0 \leq$ negative electrode Dv50'/positive electrode $Dv50 \leq 25$.

In some embodiments, during use of the battery, the charging capacity of the battery is tightly controlled by optimizing the charging strategy of the battery, so that the actually used CB value of the battery is stabilized at 1.10-1.30; that is, the reversible capacity of the negative electrode plate of the battery/the actually exerted capacity of the positive electrode plate of the battery is between 1.10~1.30.

In some embodiments, the secondary battery includes a lithium ion battery, and only the soft pack lithium ion battery is used as an example. This disclosure is not limited to the application of the soft pack battery, but also includes the application of a common lithium ion battery form such as an aluminum case battery and a cylindrical battery.

Electrical device

In some embodiments, the present disclosure provides an electrical device that includes a secondary battery as described above. The electrical device may be used for, but is not limited to, a backup power supply, an electric motor, an electric automobile, an electric motorcycle, a power assisted cycle, a bicycle, an electric tool, a domestic large battery, and the like.

Example 1

Lithium iron phosphate, a positive electrode conductive agent, a positive electrode adhesive, and a positive electrode solvent were mixed to prepare a positive electrode slurry, and the positive electrode slurry was coated on a surface of a positive electrode current collector to obtain a positive electrode plate;
The positive electrode plate was prepared by following steps: lithium iron phosphate, conductive carbon black (SP), and PVDF were mixed in a weight ratio of 97:0.7:2.3, and then the mixture was added to NMP for sufficient mixing; after the mixture was evenly mixed, the mixture was coated on both surfaces of a carbon-coated aluminum foil of $(12+1+1)$ $\mu m$; and then a resulting electrode plate was dried, rolled, slitted, and cut to obtain a positive electrode plate, wherein thickness of the single-side positive electrode active material layer was 81 $\mu m$, the particle size of lithium iron phosphate was Dv50 (0.67 $\mu m$), Dv10 (0.15 $\mu m$), Dv90 (5.5 $\mu m$), Dv99 (9.2 $\mu m$); Dn50 (0.33 $\mu m$), Dn10 (0.10 $\mu m$), Dn90 (1.15 $\mu m$), Dn99 (3.20 $\mu m$).
Graphite, negative electrode dispersant, negative electrode conductive agent, negative electrode adhesive, and negative electrode solvent were mixed to prepare a negative electrode slurry, and the negative electrode slurry was coated on a surface of a negative electrode current collector to obtain a negative electrode plate.
The negative electrode plate was prepared by following steps: graphite, conductive carbon black (SP), CMC, and SBR were mixed in a mass ratio of 96.3:0.7:1.1:1.9, and then were mixed thoroughly in water; after the mixture was evenly mixed, the mixture was coated on both surfaces of a copper foil of 6 $\mu m$; and then a resulting electrode plate was dried, rolled, slitted, and cut to obtain a negative electrode plate, wherein thickness of the single-side negative electrode active material layer was 65 $\mu m$, and the particle size of the negative electrode active material was: Dv50' (16.3 $\mu m$), Dv10' (8.5 $\mu m$), Dv90' (30.2 $\mu m$), Dv99' (40.4 $\mu m$); Dn50' (8.2 $\mu m$), Dn10' (3.1 $\mu m$), Dn90' (15.2 $\mu m$), Dn99' (25.3 $\mu m$).

Separator: polyethylene film;

Electrolyte: vinylene carbonate, ethyl methyl carbonate, and dimethyl carbonate were mixed in a mass ratio of 1:1:1, and then lithium hexafluorophosphate was added, and after the mixture was evenly mixed, an additive was added. The content of lithium hexafluorophosphate is 12% and the content of the additive, vinylene carbonate, is 0.5%, based on the mass of the electrolyte.
In the preparation process of the lithium ion battery, the positive electrode plate, the negative electrode plate, the separator, and other battery components prepared in the present disclosure were assembled, and the long-life lithium iron phosphate lithium-ion battery was obtained through the steps of shaping, baking, packaging, electrolyte injection, formation, sorting, and the like.
Preparation of Examples 2~16: the particle sizes of the active materials were screened to obtain active materials with different particle sizes, the coating weight of the active materials of the positive electrode plate and the negative electrode plate were adjusted to control the design CB values, the compaction density was controlled by adjusting the roll thickness of the active material layer. Examples 2~16 were prepared according to the method of Example 1, and the parameters of Examples 2~16 are shown in Table 1.

Battery performance test

Cycle capacity retention: the nominal capacity of the secondary battery was $C_1$, and the discharge capacity $C_2$ was obtained after the corresponding number of cycles of 1C/1C at a certain temperature (25°C, 45°C, 60°C), and the capacity retention $=C_2/C_1\times100\%$.

Energy efficiency: the percentage of the energy output when the lithium ion battery is discharged to the energy input when the lithium ion battery is previously charged.

Energy efficiency test method:

The secondary battery was charged at a constant current of 1C to the nominal capacity of the battery, and the charging energy was $E_1$; the secondary battery was allowed to stand for 30 min; the secondary battery was discharged at a constant current of 1C to a lower limit voltage (2.5V), and the discharge energy was $E_2$; and the value of the energy efficiency of the secondary battery was $E_2/E_1$.

Storage capacity recovery test method:

At normal temperature, the secondary battery was charged at a constant current of 1C to a battery nominal capacity of $X_1$ Ah;

The secondary battery was transferred to an oven at 60 °C for 400 days; at normal temperature, the secondary battery was discharged to 2.5V at 1C; the secondary battery was allowed to stand for 30 min; thereafter, the secondary battery was charged to 3.65V at a constant current and constant voltage of 1C, and the cutoff current was 0.05C; the secondary battery was allowed to stand for 30 min; and the secondary battery was discharged to 2.5V at a constant current of 1C, and the discharge capacity was $X_2$ Ah. The capacity recovery rate of the secondary battery was $X_2/X_1\times100\%$.

Table 1 Parameters and Test Results of Examples 1~16 and Comparative Examples 1 to 3

| No. | Design CB value of battery | Actual CB value | Battery Design CB/Positive electrode plate PD | Dv50' (μm) | Dv50 (μm) | Dv50' /Dv50 | Capacity Retention after 4000 Cycles of 1C/1C at 25°C (%) | Capacity Retention after 3500 Cycles of 1C/1C at 45°C (%) | Capacity Recovery after 400 days of storage at 60°C and 100% SOC (%) | Energy efficiency at 25°C (%) |
|---|---|---|---|---|---|---|---|---|---|---|
| Example 1 | 0.846 | 1.1 | 0.353 | 16.3 | 0.67 | 24.3 | 98.70 | 94.60 | 98.50 | 93.40 |
| Example 2 | 0.88 | 1.1 | 0.367 | 16.3 | 0.67 | 24.3 | 98.30 | 92.30 | 97.60 | 93.30 |
| Example 3 | 0.917 | 1.1 | 0.382 | 16.3 | 0.67 | 24.3 | 96.00 | 87.70 | 91.80 | 93.20 |
| Example 4 | 0.957 | 1.1 | 0.399 | 16.3 | 0.67 | 24.3 | 92.50 | 83.00 | 84.80 | 93.00 |
| Example 5 | 0.998 | 1.1 | 0.416 | 16.3 | 0.67 | 24.3 | 87.80 | 76.30 | 84.10 | 92.80 |

(continued)

| No. | Design CB value of battery | Actual CB value | Battery Design CB/Positive electrode plate PD | Dv50' (μm) | Dv50 (μm) | Dv50'/Dv50 | Capacity Retention after 4000 Cycles of 1C/1C at 25°C (%) | Capacity Retention after 3500 Cycles of 1C/1C at 45°C (%) | Capacity Recovery after 400 days of storage at 60°C and 100% SOC (%) | Energy efficiency at 25°C (%) |
|---|---|---|---|---|---|---|---|---|---|---|
| Comparative Example 1 | 1.1 | 1.1 | 0.242 | 16.3 | 0.67 | 24.3 | 78.60 | 71.20 | 79.30 | 82.50 |
| Example 6 | 0.821 | 1.15 | 0.328 | 14.5 | 0.83 | 17.5 | 100.00 | 95.90 | 100.00 | 93.60 |
| Example 7 | 0.852 | 1.15 | 0.341 | 14.5 | 0.83 | 17.5 | 99.60 | 93.60 | 98.90 | 93.50 |
| Example 8 | 0.885 | 1.15 | 0.354 | 14.5 | 0.83 | 17.5 | 97.30 | 89.00 | 93.10 | 93.40 |
| Example 9 | 0.92 | 1.15 | 0.368 | 14.5 | 0.83 | 17.5 | 93.80 | 84.30 | 86.10 | 93.20 |
| Example 10 | 0.958 | 1.15 | 0.383 | 14.5 | 0.83 | 17.5 | 89.10 | 77.60 | 85.40 | 93.00 |
| Example 11 | 1.05 | 1.15 | 0.420 | 14.5 | 0.83 | 17.5 | 84.90 | 74.10 | 84.40 | 92.70 |
| Comparative Example 2 | 1.15 | 1.15 | 0.250 | 14.5 | 0.83 | 17.5 | 80.10 | 72.50 | 80.60 | 82.60 |
| Example 12 | 0.8 | 1.2 | 0.461 | 14.5 | 1.03 | 14.1 | 100.00 | 97.10 | 100.00 | 94.00 |
| Example 13 | 0.845 | 1.2 | 0.323 | 14.5 | 1.03 | 14.1 | 100.00 | 96.80 | 100.00 | 93.90 |
| Example 14 | 0.896 | 1.2 | 0.532 | 14.5 | 1.03 | 14.1 | 98.60 | 94.50 | 99.60 | 93.80 |
| Example 15 | 0.952 | 1.2 | 0.7 | 14.5 | 1.03 | 14.1 | 95.10 | 89.90 | 93.80 | 93.60 |

(continued)

| No. | Design CB value of battery | Actual CB value | Battery Design CB/Positive electrode plate PD | Dv50' (μm) | Dv50 (μm) | Dv50'/Dv50 | Capacity Retention after 4000 Cycles of 1C/1C at 25°C (%) | Capacity Retention after 3500 Cycles of 1C/1C at 45°C (%) | Capacity Recovery after 400 days of storage at 60°C and 100% SOC (%) | Energy efficiency at 25°C (%) |
|---|---|---|---|---|---|---|---|---|---|---|
| Example 16 | 1.05 | 1.2 | 0.258 | 14.5 | 1.03 | 14.1 | 90.40 | 85.20 | 86.80 | 93.40 |
| Comparative Example 3 | 1.2 | 1.2 | 0.730 | 14.5 | 1.03 | 14.1 | 82.10 | 73.20 | 81.10 | 82.80 |

As can be seen from the results in Table 1, the battery design CB/positive electrode plate PD was in a range from 0.258 to 0.700, and it is defined that the range of Dv50'/Dv50 was from 2 to 25, in particular, the range of Dv50'/Dv50 shown in Examples 1 to 16 was from 14 to 25, which improves the lithium ion deintercalation rate matching of the positive and negative electrode materials, and improves the cycle and storage life of the secondary battery. When the battery design CB/positive electrode plate PD was in a range of 0.258-0.700, but the range of Dv50'/Dv50 was not in the above-mentioned range, the deintercalation rates of the positive and negative electrodes did not match, and the cycle life of the battery cannot reach the desired state. When Dv50'/Dv50 was in a range of 2.0~20, but the battery design CB/positive electrode plate PD was not within the range of 0.258-0.700, the cycle and storage life of the secondary battery cannot be satisfied, and the cycle life of the battery cannot be increased. According to the present disclosure, when the actually used CB value was in a range of 1.1-1.3, it can be ensured that a proper amount of lithium intercalation vacancies exist during the working process of the negative electrode. When the actually used CB value was greater than 1.3, the lithium intercalation sites of the negative electrode during the working process were excessively sufficient, and the generation of SEI consumed too much active lithium, which is detrimental to the improvement of the cycle/storage life. When the actually used CB value is less than 1.1, the lithium intercalation sites of the negative electrode during the working process were insufficient, so that the lithium was precipitated, and the secondary reaction of the secondary battery was increased, which affects the cycle storage life.

The comparison of the battery test results in the above table shows that the long-life lithium iron phosphate lithium-ion battery prepared by the present disclosure is significantly superior to a conventional lithium iron phosphate lithium-ion battery without a positive electrode redundancy design in terms of the capacity retention at 25°C after 1C/1C cycle, the capacity retention at 45°C after 1C/1C cycle, storage capacity recovery at 60°C and 100% SOC, and energy efficiency.

Examples 17~20 were prepared as follows.

Lithium iron phosphate, a positive electrode conductive agent, a positive electrode adhesive, and a positive electrode solvent were mixed to prepare a positive electrode slurry, and the positive electrode slurry was coated on a surface of a positive electrode current collector to obtain a positive electrode plate;

The positive electrode plate was prepared by following steps: lithium iron phosphate, conductive carbon black (SP), and PVDF were mixed in a mass ratio of 96.7:0.9:2.4, and then the mixture was added to NMP for sufficient mixing again; after the mixture was evenly mixed, and the mixture was coated on both sides of a carbon-coated aluminum foil of (12+1+1) μm; and then a resulting electrode plate was dried, rolled, slitted, and cut to obtain a positive electrode plate, wherein the thickness of the single-side positive electrode active material layer was 81 μm;

The negative electrode plate was prepared by following steps: graphite, conductive carbon black (SP), CMC, and SBR were mixed in a mass ratio of 96.1:0.7:1.1:2.1, and then were mixed thoroughly in water; after the mixture was evenly mixed, the mixture was coated on both surfaces of a copper foil of 6 μm; and then a resulting electrode plate was dried, rolled, slitted, and cut to obtain a negative electrode plate, wherein thickness of the single-side negative electrode active material layer was 65 $\mu$m;

Separator: polyethylene film;

The preparation method was similar to Example 1 except that the amount of vinylene carbonate was as shown in Table 2.

In the preparation process of the lithium ion battery, the positive electrode plate, the negative electrode plate, the separator, and other battery components prepared in the present disclosure were assembled, and the lithium ion battery is obtained through the steps of shaping, baking, packaging, electrolyte injection, formation, sorting, and the like.

Table 2 Parameters and Test Results for Examples 17~20

| No. | Battery design CB value | Battery used CB Value (CB') | a (%) | PD (g/cm$^3$) | a*CB /PD | Capacity Retention after 4000 Cycles of 1C/1C at 25°C (%) | Capacity Retention after 3500 Cycles of 1C/1C at 45°C (%) | Capacity Recovery after 400 days of storage at 60°C and 100% SOC (%) | Energy efficiency at 25°C (%) |
|---|---|---|---|---|---|---|---|---|---|
| Example 17 | 1.0 | 1.16 | 0.5 | 2.4 | 0.21 | 88.20 | 76.90 | 84.30 | 93.7 |
| Example 18 | 1.0 | 1.16 | 2.5 | 2.4 | 1.042 | 88.30 | 77.10 | 84.60 | 93.5 |
| Example 19 | 1.0 | 1.16 | 5 | 2.4 | 2.083 | 88.70 | 77.30 | 84.90 | 93.2 |
| Example 20 | 1.16 | 1.16 | 0 | 2.4 | 0 | 85.20 | 75.50 | 83.8 | 88.7 |

The different a values of the examples can be obtained by adjusting the amount of the first additive in the electrolyte. In the present disclosure, by controlling the relationship between the first additive a, and the CB and the PD in the electrolyte, it was ensured that the a*CB/PD was in the range of 0.2-3, and that the content of the first additive was sufficient throughout the life cycle of the secondary battery, so that the capacity decay acceleration due to the insufficient amount of the additive may not be caused. When a*CB/PD was greater than 3, the SEI film of the negative electrode may be excessively thick, resulting in deterioration of the secondary battery system dynamics, increase of the risk of lithium precipitation in the normal-temperature cycle, which is detrimental to the normal-temperature cycle life. When a*CB/PD was less than 0.2, the thickness of the SEI film of the negative electrode may be insufficient, resulting in increase of the active lithium consumption of the negative electrode in the cycle process, and deterioration of the cycle. At the same time, the range of the actual CB value needs to be in a range of 1.10-1.30, so as to ensure that the negative electrode has a proper amount of lithium intercalation vacancies, thereby improving the battery life.

The comparison of the battery test results in the above table shows that the long-life lithium iron phosphate lithium-ion battery prepared by controlling a, PD, and a*CB1/PD values on the basis of the positive electrode redundancy design in the present disclosure is significantly superior to the conventional lithium iron phosphate lithium-ion battery prepared without the positive electrode redundancy design in terms of the capacity retention at 25°C after 1C/1C cycle, the capacity retention at 45°C after 1C/1C cycle, storage capacity recovery at 60°C and 100% SOC, and energy efficiency.

Examples 21~24 were prepared as follows.

Lithium iron phosphate, a positive electrode conductive agent, a positive electrode adhesive, and a positive electrode solvent were mixed to prepare a positive electrode slurry, and the positive electrode slurry was coated on a surface of a positive electrode current collector to obtain a positive electrode plate;

The positive electrode plate was prepared by following steps: lithium iron phosphate, conductive carbon black (SP), and PVDF were mixed in a mass ratio of 97.3:0.5:2.2, and then the mixture was added to NMP for sufficient mixing; after the mixture was evenly mixed, and the mixture was coated on both sides of a carbon-coated aluminum foil of (12+1+1) $\mu$m; and then a resulting electrode plate was dried, rolled, slitted, and cut to obtain a positive electrode plate, wherein the thickness of the single-side positive electrode active material layer was 81 $\mu$m;

The negative electrode plate was prepared by following steps: graphite, conductive carbon black (SP), CMC, and SBR were mixed in a mass ratio of 96.5:0.5:1.2:1.8, and then were mixed thoroughly in water; after the mixture was evenly mixed, the mixture was coated on both surfaces of a copper foil of 6 $\mu$m; and then a resulting electrode plate was dried, rolled, slitted, and cut to obtain a negative electrode plate, wherein thickness of the single-side negative electrode active material layer was 65 $\mu$m;

Graphite, negative electrode dispersant, negative electrode conductive agent, negative electrode adhesive, and negative electrode solvent were mixed to prepare a negative electrode slurry, and the negative electrode slurry was coated on a surface of a negative electrode current collector to obtain a negative electrode plate;

Electrolyte: vinylene carbonate, ethyl methyl carbonate and propyl propionate were mixed in a mass ratio of 1:1:1, and then lithium hexafluorophosphate was added, and after the mixture was evenly mixed, an additive was added. The content of lithium hexafluorophosphate is 12% based on the mass of the electrolyte, the first additive is vinylene carbonate and the second additive is lithium bis(oxalate)borate, and the contents of the first additive and the second additive are as shown in Table 3.

In the preparation process of the lithium ion battery, the positive electrode plate, the negative electrode plate, the separator, and other battery components prepared in the present disclosure were assembled, and the long-life lithium iron phosphate lithium-ion battery was obtained through the steps of shaping, baking, packaging, electrolyte injection, formation, sorting, and the like.

Table 3 Parameters and Test Results of Examples 21~24

| No. | Battery Design CB Value (CB) | Actual CB Value (CB') | a | a+b | a/b | Capacity Retention after 4000 Cycles of 1C/1C at 25°C (%) | Capacity Retention after 3500 Cycles of 1C/1C at 45°C (%) | Capacity Recovery after 300 days of storage at 60°C and 100% SOC (%) | Energy efficiency at 25°C (%) |
|---|---|---|---|---|---|---|---|---|---|
| Example 21 | 0.9 | 1.20 | 0.3 | 3.3 | 0.1 | 98.70 | 94.60 | 99.70 | 93.40 |
| Example 22 | 0.9 | 1.20 | 2 | 2.4 | 5 | 98.80 | 94.70 | 99.80 | 93.60 |
| Example 23 | 0.9 | 1.20 | 4 | 4.4 | 10 | 98.70 | 94.70 | 99.90 | 93.70 |
| Example 24 | 0.9 | 1.20 | 0 | 3 | 0 | 92.00 | 83.10 | 91.10 | 92.80 |

As shown in Table 3, the above values of a and b can be obtained by adjusting the addition amounts of the first additive and the second additive. The value of a+b was in this range, it was possible to ensure that the amount of the film-forming additive of the negative electrode was sufficient, and to ensure that the cycle and storage life of the battery met the requirements. At the same time, the value of a/b was in this range, it was possible to improve the cycle and storage life of the secondary battery while taking its energy efficiency into account. The comparison of the battery test results in the above table shows that the long-life lithium iron phosphate lithium-ion battery prepared by controlling the values of a, a+b, and a/b on the basis of the positive electrode redundancy design in the present disclosure is significantly superior to the conventional lithium iron phosphate lithium-ion battery prepared without the positive electrode redundancy design in terms of the capacity retention at 25°C after 1C/1C cycle, the capacity retention at 45°C after 1C/1C cycle, storage capacity recovery at 60°C and 100% SOC, and energy efficiency.

In the above-mentioned embodiments, the description of each embodiment has its own emphasis, and parts not described in detail in a certain embodiment may be referred to the related description of other embodiments.

A secondary battery and a charging apparatus provided in an embodiment of the present disclosure have been described in detail. The principles and embodiments of the present disclosure have been described with reference to specific embodiments, and the description of the above embodiments is merely intended to aid in the understanding of the method of the present disclosure and its core idea. At the same time, changes may be made by those skilled in the art to both the specific implementations and the scope of application in accordance with the teachings of the present disclosure. In view of the foregoing, the content of the present specification should not be construed as limiting the disclosure.

**Claims**

1.  A secondary battery, wherein the secondary battery comprises a positive electrode plate and a negative electrode plate, the secondary battery satisfies $0.258 \leq CB/PD \leq 0.700$; wherein CB refers to a ratio of a capacity of the negative electrode plate per unit area to a capacity of the positive electrode plate per unit area; and
PD refers to a compaction density of the positive electrode plate, in units of $g/cm^3$.

2.  The secondary battery according to claim 1, wherein $0.275 \leq CB/PD \leq 0.55$.

3.  The secondary battery according to claim 1, wherein $0.31 \leq CB/PD \leq 0.48$.

4.  The secondary battery according to claim 1, wherein the secondary battery satisfies $0.8 \leq CB \leq 1.1$.

5.  The secondary battery according to any one of claims 1 to 4, wherein the secondary battery satisfies $1.5 \leq PD \leq 3.1$.

6.  The secondary battery according to claim 1, wherein the positive electrode plate comprises a positive electrode active material layer, and the positive electrode active material layer comprises a positive electrode active material; the negative electrode plate comprises a negative electrode active material layer, and the negative electrode active material layer comprises a negative electrode active material; and the positive electrode active material and the negative electrode active material satisfy: $2 \leq Dv50'/Dv50 \leq 25$; and

    wherein Dv50' refers to a particle size of the negative electrode active material corresponding to a cumulative volume percentage of the negative electrode active material reaching 50%, in units of $\mu m$; and
    Dv50 refers to a particle size of the positive electrode active material corresponding to a cumulative volume percentage of the positive electrode active material reaching 50%, in units of $\mu m$.

7.  The secondary battery according to claim 6, wherein the positive electrode active material layer and the negative electrode active material layer satisfy: $0 \leq (H_1-H_2)/H_2 \leq 0.9$;

    wherein $H_1$ refers to a thickness of the positive electrode active material layer on one side, in units of $\mu m$; and
    $H_2$ refers to a thickness of the negative electrode active material layer on one side, in units of $\mu m$.

8.  The secondary battery according to claim 1, wherein the secondary battery comprises an electrolyte, the electrolyte comprises a first additive, and the first additive comprises at least one of vinylene carbonate or vinyl ethylene carbonate.

9.  The secondary battery according to claim 8, wherein the electrolyte further comprises a second additive, the second additive comprises at least one of LiFSI, LiODFB, $LiPO_2F_2$, $LiBF_4$, or LiBOB.

10. The secondary battery according to claim 8, wherein a content of the first additive is a% based on a total weight of the electrolyte, wherein a, CB, and PD satisfy $0.2 \leq a \times CB/PD \leq 3$.

11. The secondary battery according to claim 10, wherein a content of the second additive is b% based on the total weight of the electrolyte; and
a, b satisfy at least one of the following features:

$$\text{(I)} \ 0.1 \leq a+b \leq 5;$$

or

$$\text{(II)} \ 0.1 \leq a/b \leq 10.$$

12. The secondary battery according to claim 6, wherein the particle size of the negative electrode active material satisfies $5 \leq Dv50' \leq 25$, and the particle size of the positive electrode active material satisfies $0.3 \leq Dv50 \leq 3.5$.

13. The secondary battery according to claim 6, wherein a particle size of the negative electrode active material satisfies:

$0.5 \leq Dv10' \leq 10$, $2.5 \leq Dv90' \leq 45$, $Dv99' \leq 50$, $Dn10' \leq 4$, $0.5 \leq Dn50' \leq 10.5$, $1.5 \leq Dn90' \leq 5$, $Dn99' \leq 40$, in units of $\mu$m.

14. The secondary battery according to claim 6, wherein a particle size of the positive electrode active material satisfies: $0.1 \leq Dv10 \leq 1$, $0.5 \leq Dv90 \leq 6.5$, $3.5 \leq Dv99 \leq 20$, $0.05 \leq Dn10 \leq 1$, $0.1 \leq Dn50 \leq 2.5$, $0.5 \leq Dn90 \leq 3.5$, $1.5 \leq Dn99 \leq 10$, in units of $\mu$m.

15. The secondary battery according to claim 7, wherein $40 \leq H_1 \leq 160$, and $30 \leq H_2 \leq 120$.

16. An electrical device, wherein the electrical device comprises the secondary battery according to any one of claims 1 to 15.

## INTERNATIONAL SEARCH REPORT

| International application No. |
|---|
| **PCT/CN2022/144288** |

**A. CLASSIFICATION OF SUBJECT MATTER**

H01M10/0525(2010.01)i; H01M10/0567(2010.01)n; H01M4/13(2010.01)n; H01M4/36(2006.01)n

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXTC, WPABSC, ENTXT, WPABS, DWPI: 电池, 正极, 阴极, 阳极, 负极, 容量, 压实密度, 平均粒径, 厚度, 电解液, 添加剂, 碳酸亚乙烯酯, 乙烯基碳酸亚乙酯, battery, positive, negative, anode, cathode, CB, PD, compact+ density, capacit+, D50, D90, D10, D99, electrolyte, additive, EC

**C. DOCUMENTS CONSIDERED TO BE RELEVANT**

| Category* | Citation of document, with indication, where appropriate, of the relevant passages | Relevant to claim No. |
|---|---|---|
| PX | CN 115472898 A (SUNWODA ELECTRIC VEHICLE BATTERY CO., LTD.) 13 December 2022 (2022-12-13)<br>claim 13, and description, paragraphs [0005]-[0154] | 1-16 |
| X | CN 109148820 A (INSTITUTE OF PROCESS ENGINEERING, CHINESE ACADEMY OF SCIENCES et al.) 04 January 2019 (2019-01-04)<br>description, paragraphs [0003]-[0022] | 1-5, 16 |
| Y | CN 109148820 A (INSTITUTE OF PROCESS ENGINEERING, CHINESE ACADEMY OF SCIENCES et al.) 04 January 2019 (2019-01-04)<br>description, paragraphs [0003]-[0022] | 6-15 |
| Y | CN 109449446 A (NINGDE CONTEMPORARY AMPEREX TECHNOLOGY CO., LTD.) 08 March 2019 (2019-03-08)<br>paragraphs [0008]-[0038] | 6-7, 12-15 |
| Y | CN 114695943 A (SHENZHEN CAPCHEM TECHNOLOGY CO., LTD.) 01 July 2022 (2022-07-01)<br>description, paragraphs [0005]-[0090] | 8-11 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 May 2023** | **31 May 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/144288** |

**C.      DOCUMENTS CONSIDERED TO BE RELEVANT**

| Category* | Citation of document, with indication, where appropriate, of the relevant passages | Relevant to claim No. |
| --- | --- | --- |
| X | CN 114695968 A (SICHUAN NEW ENERGY VEHICLE INNOVATION CENTER CO., LTD.) 01 July 2022 (2022-07-01)<br>     description, paragraphs [0002]-[0018] | 1-2, 4-5 |
| Y | CN 114695968 A (SICHUAN NEW ENERGY VEHICLE INNOVATION CENTER CO., LTD.) 01 July 2022 (2022-07-01)<br>     description, paragraphs [0002]-[0018] | 6-15 |
| A | CN 104577194 A (TONGXIANG ZHONGSHENG ENERGY TECHNOLOGY CO., LTD.) 29 April 2015 (2015-04-29)<br>     entire document | 1-16 |
| A | WO 2022047705 A1 (CONTEMPORARY AMPEREX TECHNOLOGY CO., LTD.) 10 March 2022 (2022-03-10)<br>     entire document | 1-16 |

Form PCT/ISA/210 (second sheet) (July 2022)

**INTERNATIONAL SEARCH REPORT**
Information on patent family members

International application No.

**PCT/CN2022/144288**

| Patent document cited in search report | | | Publication date (day/month/year) | Patent family member(s) | | | Publication date (day/month/year) |
|---|---|---|---|---|---|---|---|
| CN | 115472898 | A | 13 December 2022 | None | | | |
| CN | 109148820 | A | 04 January 2019 | None | | | |
| CN | 109449446 | A | 08 March 2019 | WO | 2020078357 | A1 | 23 April 2020 |
| | | | | CN | 109449446 | B | 11 September 2020 |
| CN | 114695943 | A | 01 July 2022 | WO | 2022143189 | A1 | 07 July 2022 |
| CN | 114695968 | A | 01 July 2022 | CN | 114695968 | B | 02 September 2022 |
| CN | 104577194 | A | 29 April 2015 | None | | | |
| WO | 2022047705 | A1 | 10 March 2022 | US | 2023108289 | A1 | 06 April 2023 |
| | | | | EP | 4170755 | A1 | 26 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211328888